# EUROPÄISCHE PATENTSCHRIFT

(11) **EP 0 896 811 B1**
(45) Veröffentlichungstag und Bekanntmachung des Hinweises auf die Patenterteilung: **11.06.2003**
(21) Anmeldenummer: 98112381.3
(22) Anmeldetag: 03.07.1998
(51) Int. Cl.: A61C 1/18

(54) **Ärztliches oder zahnärztliches Behandlungsinstrument**
Medical or dental treating instrument
Instrument de traitement médical ou dentaire

(30) Priorität: 14.08.1997 DE 19735393
(43) Veröffentlichungstag der Anmeldung: 17.02.1999
(73) Patentinhaber: Kaltenbach & Voigt GmbH & Co. KG, 88400 Biberach/Riss (DE)
(72) Erfinder: Löhn, Gerd, 88400 Biberach-Rissegg (DE)
(74) Vertreter: Schmidt-Evers, Jürgen, Dipl.-Ing.

(56) Entgegenhaltungen:
- EP-A- 0 230 010
- EP-A- 0 369 043
- DE-U- 8 425 015

## Beschreibung

Die Erfindung bezieht sich auf ein ärztliches oder zahnärztliches Behandlungsinstrument nach dem Oberbegriff des Anspruchs 1.

Ein Behandlungsinstrument dieser Art ist in der DE 8425015 U1 beschrieben und umfasst ein sogenanntes Anschlußteil, das durch eine flexible Versorgungsleitung mit einem Steuergerät verbunden oder verbindbar ist, ein Handstück, in dessen vorderem Ende ein Behandlungswerkzeug einspannbar ist, eine Steck/Dreh-Kupplung zum lösbaren Kuppeln des Handstücks am Anschlußteil und wenigstens eine Mediumleitung z.B. für Wasser und/oder Druckluft, die sich von hinten nach vorne durch das Behandlungsinstrument und auch durch die Steck/Dreh-Kupplung erstreckt, wobei die Mediumleitung eine zylindrische Trennfuge zwischen dem Kupplungszapfen und der ihn aufnehmenden Kupplungsausnehmung der Steck/Dreh-Kupplung Z-förmig durchsetzt und zu beiden Seiten ein Dichtungsring zur Abdichtung der Mediumleitung im Bereich der Trennfuge angeordnet ist.

Sogenannte Motor-Instrumente mit einem elektrischen Motorantrieb weisen in der Regel zwei Mediumleitungen auf, nämlich einen für Wasser und einen für Blasluft. Sogenannte Turbinen-Instrumente weisen zusätzlich einen weiteren Mediumkanal für Druckluft auf, der sich zur im vorderen Endbereich des Handstücks angeordneten Turbine erstreckt und die Turbine zu ihrem Antrieb mit Druckluft versorgt. Bei dem bekannten Behandlungsinstrument sind folglich im Bereich der Steck/Dreh-Kupplung wenigstens drei Dichtungsringe mit zugehörigen Aufnahmenuten erforderlich.

Mit einem vorliegenden Behandlungsinstrument wird unmittelbar an einer Behandlungsstelle des menschlichen oder tierischen Körpers eingewirkt, wodurch eine Kontamination des Behandlungsinstruments mit Krankheitserregern nicht zu vermeiden ist. Zur Desinfektion und Sterilisation eines benutzten Handstücks bzw. Behandlungsinstruments gibt es eine Vielzahl Methoden. Besonders problematisch ist eine Kontamination, die in einem Medienkanal, insbesondere in einem Wasserkanal stattfindet, da eine solche schwierig zu beseitigen ist und einen verhältnismäßig großen Aufwand erfordert. Es ist auch hervorzuheben, daß eine Rücksaugung eine Kontamination des betreffenden Mediumkanals begünstigt.

Zur Vermeidung eines Rücksaugeffekts nach dem Abschalten einer Mediumleitung, insbesondere für Wasser, ist bereits vorgeschlagen worden, ein Rückschlagventil in der Mediumleitung im Behandlungsinstrument anzuordnen, das nur bei einer nach vorne gerichteten Wasserströmung öffnet und nach einer Abschaltung der Medienleitung selbsttätig sperrt. Ein solches Behandlungsinstrument ist in der EP 0 230 010 A1 beschrieben. Bei dieser vorbekannten Ausgestaltung sind zwischen zwei einen axialen Abstand voneinander aufweisenden Dichtungsringen (O-Ringe) in einem Kupplungszapfen eine Ringnut und ein darin ausmündender radialer Mediumleitungsabschnitt angeordnet, wobei ein in der Ringnut angeordneter Ventilring ein Rückschlagventil für den radialen Mediumleitungsabschnitt bildet.

Ein Behandlungsinstrument gemäß dem Oberbegriff von Anspruch 2 ist aus der EP-A-0 230 010 bekannt.

Der Erfindung liegt die Aufgabe zugrunde, ein Behandlungsinstrument der im Oberbegriff des Anspruchs 1 oder 2 angegebenen Arten so auszugestalten, daß bei Gewährleistung einer einfachen Bauweise und sicheren Funktion eine Rücksaugung durch eine Medienleitung und/oder eine weitergehende Kontaminierung der Mediumleitung vermieden wird.

Diese Aufgabe wird durch die Merkmale des Anspruchs 1 oder 2 gelöst.

Bei den erfindungsgemäßen Ausgestaltungen sind ein Rückschlagventil und ein Dichtungsring zur Abdichtung der Mediumleitung im Bereich der Trennfuge zwischen dem Kupplungszapfen und der Kupplungsausnehmung zu einer Baueinheit zusammengefaßt wobei der erfindungsgemäße Dichtungsring sowohl das Ringdichtungselement als auch den Ventilkörper des Rückschlagventils aufweist. Hierdurch ist nicht nur eine besonders vorteilhafte Anwendungsstelle vorgegeben, an der die Montage oder Demontage der Dichtungsteile einfach und handhabungsfreundlich erfolgen kann, sondern es bedarf auch nur eines Dichtungselements, um sowohl die Abdichtung der Mediumleitung als auch das Rückschlagventil zu bilden. Diese erfindungsgemäße Ausgestaltung zeichnet sich somit durch eine wesentliche Vereinfachung aus, wobei ein separates Bauteil in Fortfall kommt und auch Raum für ein separates Rückschlagventil eingespart wird.

Im Funktionsbetrieb unterliegen die Dichtungsringe einem beträchtlichen Verschleiß, was zum einen durch Drehbeanspruchungen während der Behandlung und zum anderen durch die axialen Verschiebungen beim Lösen und Schließen der Steck/Dreh-Kupplung bedingt ist. Deshalb sind die Dichtungsringe in bestimmten Zeitabständen durch Austausch zu erneuern, bevor deren Dichtungsvermögen beeinträchtigt ist.

Die Erfindung bezweckt im weiteren, bei einem Behandlungsinstrument der vorliegenden Art die Abdichtung und/oder den Austausch der Dichtungsringe im Bereich der Steck/Dreh-Kupplung zu vereinfachen.

Dies wird durch die Merkmale des Anspruchs 2 ebenfalls erreicht. Bei dieser erfindungsgemäßen Ausgestaltung ist ein Dichtungsring vorgesehen, der als einzelnes Bauteil in der Lage ist, die Mediumleitung im Bereich der Trennfuge zwischen dem Kupplungszapfen und der Kupplungsausnehmung beidseitig abzudichten. Deshalb kommt ein zweiter Dichtungsring, wie er beim Stand der Technik erforderlich ist, in Fortfall, wodurch die bereits angestrebte Vereinfachung erreicht wird, denn es braucht für eine Mediumleitung nur ein Dichtungsring gelagert und montiert bzw. demontiert zu werden. Es lassen sich auch die Herstellungskosten wesentlich senken, da weniger Aufnahmenuten für Dichtungsringe und weniger Dichtungsringe erforderlich sind.

In den Unteransprüchen sind Merkmale enthalten, die die Ausgestaltung des Behandlungsinstruments hinsichtlich Einfachheit, kostengünstige Herstellbarkeit, sichere Funktion, lange Lebensdauer und geringe Raumgröße sowie eine sichere Funktion weiter verbessern.

Nachfolgend werden die Erfindung und weitere durch sie erzielbar Vorteile anhand von vorteilhaften Ausführungsbeispielen und Zeichnungen näher erläutert. Es zeigen
- Fig. 1: ein erfindungsgemäßes ärztliches oder zahnärztliches Behandlungsinstrument mit einem Anschlußteil und einem damit gekuppelten Handstück in der Seitenansicht, teilweise geschnitten;
- Fig. 2: das Anschlußteil als Einzelteil, teilweise axial geschnitten;
- Fig. 3: die in Fig. 1 mit X gekennzeichnete Einzelheit in vergrößerter Darstellung;
- Fig. 4: die Einzelheit X in abgewandelter Ausgestaltung;
- Fig. 5: die Einzelheit X in weiter abgewandelter Ausgestaltung;
- Fig. 6: ein erfindungsgemäßes zahnärztliches Behandlungsinstrument mit einem Anschlußteil und einem damit gekuppelten Handstück in der Seitenansicht, teilweise geschnitten in abgewandelter Ausgestaltung;
- Fig. 7: das Anschlußteil nach Fig. 6 als Einzelteil;
- Fig. 8: die in Fig. 6 mit Y gekennzeichnete Einzelheit in vergrößerter Darstellung;
- Fig. 9: die Einzelheit Y in abgewandelter Ausgestaltung;
- Fig. 10: einen erfindungsgemäßen Dichtungsring nach Fig. 3 oder 8 in der Seitenansicht und in vergrößerter Darstellung;
- Fig. 11: den Dichtungsring nach Fig. 10 im axialen Schnitt;
- Fig. 12: den Dichtungsring nach Fig. 4 oder 9 in der Seitenansicht;
- Fig. 13: den Dichtungsring nach Fig. 12 im axialen Schnitt;
- Fig. 14: einen erfindungsgemäßen Dichtungsring nach Fig. 5 in der Seitenansicht;
- Fig. 15: den Dichtungsring nach Fig. 14 im axialen Schnitt;
- Fig. 16: einen erfindungsgemäßen Dichtungsring in der Seitenansicht in abgewandelter Ausgestaltung;
- Fig. 17: den Dichtungsring nach Fig. 16 im axialen Schnitt;
- Fig. 18: einen erfindungsgemäßen Dichtungsring im axialen Schnitt in weiter abgewandelter Ausgestaltung;
- Fig. 19: den Schnitt IX-IX in Fig. 18;
- Fig. 20: den Dichtungsring nach Fig. 19 in der Draufsicht.

Die Haupteile des allgemein mit 1 bezeichneten Behandlungsinstruments sind das Anschlußteil 2 und das längliche bzw. stabförmige Handstück 3, eine Steck/Dreh-Kupplung 4 mit einer im Querschnitt runden Kupplungsausnehmung 5 und einen mit geringem Bewegungsspiel darin einsteckbaren zylindrischen Kupplungszapfen 6 zum lösbaren Verbinden des Handstücks 3 mit dem Anschlußteil 2, ein in das Anschlußteil 2 integrierter Antriebsmotor 7 mit einem vorragenden Antriebszapfen 8, der in ein koaxiales Durchgangsloch 9 im Kupplungszapfen 6 hineinragt und im gekuppelten Zustand mit einer nicht dargestellten, im Handstück 3 drehbar gelagerten Antriebswelle in Antriebsverbindung steht, ein z.B. spanabhebendes Behandlungswerkzeug 11, das mittels einer im einzelnen nicht dargestellten Spannvorrichtung im vorderen Endbereich des Handstücks 3 gehalten und mit der Antriebswelle verbunden ist, und ein oder mehrere Medienleitungen, hier eine Wasserleitung 12 und eine Druckluftleitung 13, die sich als flexible Leitungen von einem nicht dargestellten Steuergerät durch eine flexible Versorgungsleitung V zum Behandlungsinstrument 1 erstrecken und sich darin als Leitung oder Leitungskanal bis zum vorderen Endbereich des Handstücks 3 erstrecken und dort beim vorliegenden Ausführungsbeispiel an Mündungsöffnungen 14 ausmünden, die auf die Behandlungsstelle gerichtet sind. Dabei erstrecken sich die Medienleitungen 12, 13 im Kupplungszapfen 6 und im Handstück 3 in Form von axparallelen Bohrungsabschnitten bzw. Leitungskanälen 15, 16, 17, 18, von denen jeweils ein zusammengehöriges Paar durch radiale, die hohlzylindrische Trennfuge 19 zwischen dem Kupplungszapfen 6 und der Wandung der Kupplungsausnehmung 5 radial durchsetzende Leitungsabschnitte 21, 22 miteinander verbunden sind, die axial gegeneinander abgedichtet und axial voneinander beabstandet sind.

Die Abdichtung kann im Rahmen der Erfindung bezüglich eines wahlweisen radialen Leitungsabschnitts 21,22 oder beider radialer Leitungsabschnitte 21, 22 jeweils mittels eines einzigen erfindungsgemäßen Dichtungsringes 23 erfolgen, der in einer Innenumfangsnut in der Kupplungsausnehmung 5 oder - wie bei den vorliegenden Ausführungsbeispielen - in einer Außenumfangsnut 24 im Kupplungszapfen 6 sitzt.

Der Dichtungsring 23 weist die Querschnittsform eines im wesentlichen flachen Bandes 23a der Breite a auf, an dem zu beiden Seiten des radialen Leitungsabschnitts 21 Ringdichtungselemente 25 angeformt sind, deren radiale Dicke c im entspannten Zustand größer ist, als die Tiefe d der Ringnut 24. Die der Trennfuge 19 zugewandten Ringflächen der Ringdichtungselemente 25 sind mit seitlichen Anlaufschrägen ausgeführt, bei der vorliegenden Ausgestaltung halbkreisförmig gerundet, wodurch sich Ringwülste 26 ergeben, zwischen denen sich eine Ringausnehmung 27 befindet, deren axiale Breite e gleich oder größer ist als die Querschnittsabmessung f eines den zugehörigen Leitungskanal 15 mit der Ringnut 24 verbindenden Querkanals 28 bzw. Querbohrung. Dem Querkanal 28 gegenüberliegend ist in der zylindrischen Innenmantelfläche des Dichtungsrings 23 eine Ringnut 29 vorgesehen, die bei der vorliegenden Ausgestaltung mit schrägen Flanken 31 konvergiert, so daß sich eine im wesentlichen dreieckige Querschnittsform für die Ringform 29 ergibt. Im Grund der Ringnut 29 ist der Dichtungsring 23 durch wenigstens einen radialen Durchgangskanal 32 durchsetzt, der in die Ringnut 27 mündet und dem gegebenenfalls in der Innenmantelfläche der Kupplungsausnehmung 5 gegenüberliegend eine Ringnut 28a angeordnet sein kann, von der die zugehörige Medienleitung mittels dem weiteren Leitungsabschnitt 16 weitergeführt ist. Der im Bereich der Ringnut 27 vorhandene Außendurchmesser g des Bandes 23a ist kleiner als der Innendurchmesser der Kupplungsausnehmung 5. Hierdurch besteht ein durch die Ringnut 27 bildender Ringspalt zwischen dem Band 23a und der zylindrischen Innenwandung der Kupplungsausnehmung 5, der den Durchfluß des Mediums gewährleistet. Das heißt, der erfindungsgemäße Dichtungsring 23 ist auch dann funktionsfähig, wenn keine Ringnut 28a angeordnet ist, wobei ein Durchgang des Mediums in jeder Drehstellung gewährleistet ist. Sofern die Ringnut 28a vorhanden, ist ihre Breite h kleiner als der Abstand der Ringdichtungselemente 25 voneinander, so daß die Ringdichtungselemente 25 an einer zylindrischen Wandung anliegen.

Vorzugsweise sind mehrere auf dem Umfang verteilt angeordnete Durchgangskanäle 32 vorgesehen, insbesondere drei bis sechs Stück auf den Umfang gleichmäßig verteilt.

Der Durchgangskanal 32 kann durch ein Loch gebildet sein, das z.B. in den Dichtungsring 23 eingestanzt ist. Von besonderem Vorteil ist es, den Durchgangskanal 32 durch einen sich in Umfangsrichtung erstreckenden Schlitz oder Schnitt 34 zu bilden, bei dem im Bereich des Schnittes 34 die einander gegenüberliegenden Wandungen des Durchgangskanals 32 aneinanderliegen. Durch diese Ausgestaltung erfüllt der Durchgangskanal 32 die Funktion eines Rückschlagventils 35, was im weiteren noch beschrieben wird. Die Länge i des Schnittes 34 ist verhältnismäßig gering und entspricht in etwa dem 1- bis 2- oder bis 3-fachen der radialen Dicke c des Dichtungsringes 23.

Eine vorbeschriebene Dichtungsanordnung läßt sich wahlweise auch in der Querebene des radialen Medienleitungsabschnitts 22 anordnen.

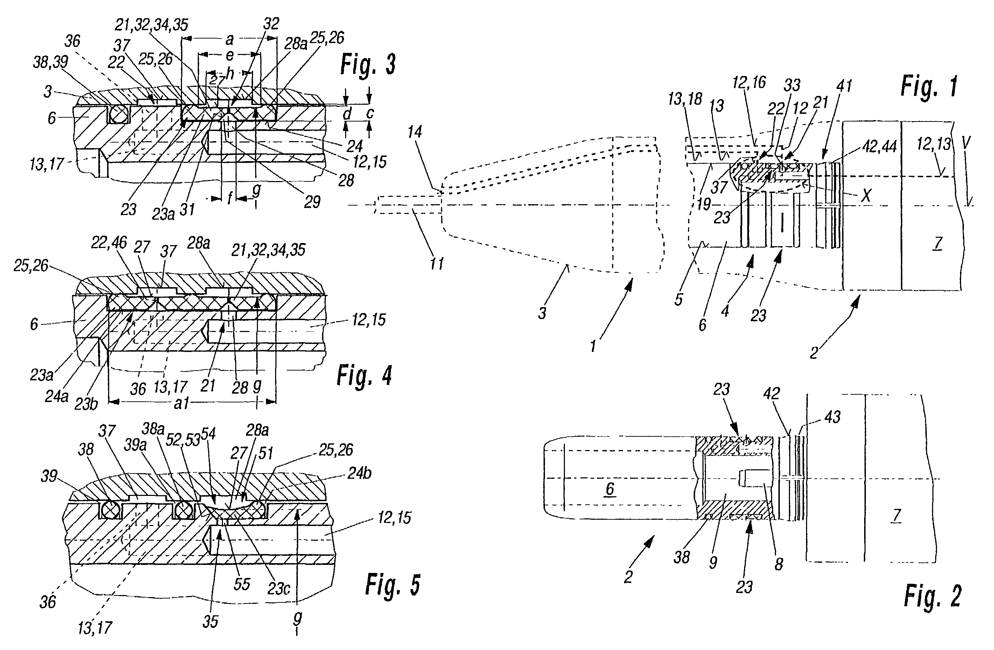

Wie insbesondere aus Fig. 3 zu entnehmen ist, bildet das in dieser Figur linke Ringdichtungselement 25 nicht nur eine axiale Abdichtung für den radialen Leitungsabschnitt 21 sondern auch für den anderen radialen Leitungsabschnitt 22, der durch einen den anderen Leitungskanal 17, hier den Leitungskanal 17 für Druckluft, mit dem weiterführenden Leitungskanal 18 im Handstück 3 verbindenden Querkanal 36 gebildet ist, der die Trennfuge 19 im Bereich einer Ringnut 37 radial durchsetzt, die in der Außenmantelfläche des Kupplungszapfens 6 oder der Innenmantelfläche der Kupplungsausnehmung 5 angeordnet sein kann und von der der weiterführende Leitungskanal 18 ausgeht. Der Dichtungsring 23 und die ihn aufnehmende Ringnut 24 sind folglich so breit bemessen, daß sie sich axial bis in die Nähe des benachbarten radialen Leitungsabschnitts 22 erstrecken, so daß das linke Ringdichtungselement 25 die zugehörige Axialdichtung für den benachbarten radialen Leitungsabschnitt 22 bilden kann. Auf der dem Dichtungsring 23 abgewandten Seite des radialen Leitungsabschnitts 22 ist die zugehörige Axialdichtung durch einen Dichtungsring 38 vorzugsweise in Form eines O-Ringes gebildet, der in einer Ringnut 39 im Kupplungszapfen 6 oder in der Kupplungsausnehmung 5 sitzt wie es ansich bekant ist.

Die vorbeschriebenen Ausgestaltungen gewährleisten zum einen ein Kuppeln der Steck/Dreh-Kupplung 4 in einer wahlweisen Drehposition der Kupplungsteile zueinander und zum anderen im gekuppelten Zustand ein wahlweises Drehen der Kupplungsteile relativ zueinander und zwar auch über 360° hinaus, wobei die vorbeschriebenen Durchgänge der Medienleitungen 12, 13 durch die Kupplung in jeder Drehstellung gewährleistet sind.

Der Steck/Dreh-Kupplung 4 ist noch eine manuell leicht überdrückbare Verrastungsvorrichtung 41 zugeordnet, die eine Verrastung zwischen dem Kupplungszapfen 6 und der Kupplungsausnehmung 5 in der Kupplungsstellung ermöglicht und dabei ein Drehen der Kupplungsteile relativ zueinander gewährleistet. Die Verrastungsvorrichtung 41 ist durch ein radial nachgiebiges Verrastungselement, hier einen Verrastungsring 42 gebildet, das in einer Ringnut 43 im Kupplungszapfen 6 oder in der Kupplungsausnehmung 5 sitzt und in eine jeweils gegenüberliegende Verrastungsnut 44 mittels Anlaufschrägen manuell überdrückbar und somit leicht lösbar einrastet. Bei der vorliegenden Ausgestaltung befindet sich die Verrastungsvorrichtung 41 im Fußbereich des Kupplungszapfens 6.

Die erfindungsgemäße Ausgestaltung nach Fig. 4, bei der gleiche oder vergleichbare Teile mit gleichen Bezugszeichen versehen sind, unterscheidet sich von der vorbeschriebenen nach Fig. 3 dadurch, daß dieser Dichtungsring 23b axial größer bemessen ist und eine Breite al einnimmt, die sich so weit über beide radialen Leitungsabschnitte 21, 22 erstreckt, daß dieser Dichtungsring 23b mit zwei äußeren Ringdichtungselementen 25 und einem mittleren Ringdichtungselement 25 die erforderlichen Axialabdichtungen zu beiden Seiten der radialen Leitungsabschnitte 21, 22 zu bilden vermag. Im Rahmen der Erfindung ist es möglich, daß der Dichtungsring 23b sich axial über mehr als zwei radiale Leitungsabschnitte 21, 22 erstreckt und somit mit mehr als drei Ringdichtungselementen 25 in der jeweils sich ergebenden Anzahl mehr als zwei radiale Leitungsabschnitte axial abzudichten vermag. Die Ringnut ist hier mit 24a bezeichnet. Alle übrigen Merkmale des Dichtungsringes 23b entsprechen den des Dichtungsringes 23. Dies gilt auch für den Durchmesser g des Bandes 23a und für die den Durchgangskanälen 32 gegenüberliegenden, eventuell vorhandenen Ringnuten 28a,37, die -wie bereits erklärtauch entfallen können. Sofern die Ringnut 37 vorhanden ist, ist ihre Breite h nicht größer als die vorbeschriebene Breite e.

Aufgrund des radialen Übermaßes der Ringdichtungselemente 25 sind diese im gekuppelten Zustand radial zusammengedrückt. Aufgrund dieser Spannung erfüllen sie sowohl radial innen als auch radial außen die Funktion einer Ringdichtung.

Zur Steuerung der Medienleitungen 12, 13 sind z.B. in das Steuergerät integrierte Steuerventile vorgesehen, die durch zugehörige Steuerelemente, wie z.B. einen Fußschalter, wahlweise ansteuerbar sind, um die Behandlungsstelle mit dem jeweiligen Medium Wasser, Luft oder einem Gemisch in Form eines Sprays zu beaufschlagen.

Bei einer Mediumleitung, insbesondere für Wasser, kann aus verschiedenen Gründen ein sogenannter Rücksaugeffekt entstehen, bei dem ein Teil des Mediums nach Abschaltung noch zurückgesaugt wird, was unerwünscht ist.

Da an der Behandlungsstelle Krankheitserreger vorliegen, besteht die Gefahr, daß ein kontaminiertes Medium, insbesondere Wasser, die zugehörige Medienleitung kontaminiert. Dies wird durch den Rücksaugeffekt begünstigt.

Die erfindungsgemäße Ausgestaltung des Dichtungsringes 23,23a in Form eines vorbeschriebenen Rückschlagventils 35 ermöglicht die Vermeidung einer solchen Rücksaugung und/oder Kontaminierung zumindest für den Mediumleitungsabschnitt stromauf des Rückschlagventils 35. Da das Rückschlagventil 35 jedoch auch im stromabgelegenen Bereich der Mediumleitung 12 ein Nachsaugen verhindert oder zumindest wesentlich einschränkt, wird nicht nur der Rückfluß in der gesamten Medienleitung 12,13 verhindert sondern auch der Rückfluß im stromab des Rückschlagventils 35 gelegenen Mediumleitungsaschnitts 16 verhindert oder zumindest wesentlich verringert.

Bei der erfindungsgemäßen Ausgestaltung des Rückschlagventils 35 wird der Durchgangskanal 32 durch aneinanderliegende Schlitz- oder Schnittflächen 34 gebildet, die die Abdichtung des Durchgangskanals 32 gewährleisten. Ein Öffnen des Durchgangskanals 32 erfolgt unter der Wirkung des Drucks im zugehörigen Medium selbsttätig, wobei das Vorhandensein der Flanken 31 der Ringnut 29 eine Öffnungsbewegung der Ränder des Schnittes 34 und bei Gegendruck ein Schließen der Ränder des Schnittes 34 erleichtert und begünstigt, wodurch die Funktion verbessert wird. Sobald die zugehörige Mediumleitung 12 abgeschaltet wird, kehren die unter dem Mediumdruck aufgebogenen Randabschnitte des Durchgangskanals 32 selbsttägig in ihre Schließstellung zurück, in der die Abdichtung durch gegenseitige Anlage der Schlitz- oder Schnittflächen gewährleistet ist. Bei der vorliegenden Ausgestaltung weisen nur die dem Wasserkanal zugehörigen Durchgangskanäle 32 das Rückschlagventil 35 auf. Dies genügt, da das Medium Luft weniger kontaminationsgefährdet und wegen einer Rücksaugung weniger problematisch ist. Deshalb sind im Bereich des Luftkanals 13 die Durchgangskanäle 32 durch übliche radiale Löcher 46 gebildet. Es ist im Rahmen der Erfindung jedoch auch möglich, die Durchgangskanäle 32 für Luft im Sinne von Rückschlagventilen 35 auszubilden.

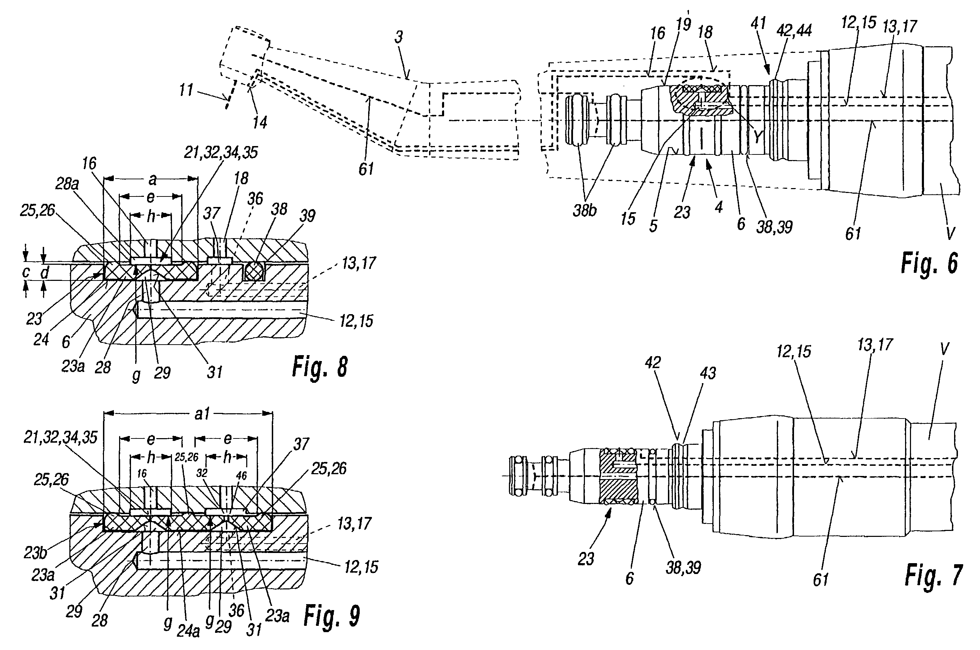

Beim Ausführungsbeispiel nach Fig. 5, bei dem gleiche oder vergleichbare Teile mit gleichen Bezugszeichen versehen sind, ist ein Dichtungsring 51 in einer im Vergleich mit dem Dichtungsring 23 abgewandelten Ausgestaltung vorgesehen. Dieser Dichtungsring 51 weist ebenfalls die Querschnittsform eines Flachbandes 23c auf, jedoch ist nur eines der axialen Ränder oder Enden im Sinne eines wulstförmig verdickten Ringdichtungselements 25 ausgebildet. Das andere axiale Ende läuft im wesentlichen flach aus, wobei seine zugehörige Stirnfläche im Sinne eines Unterschnittes nach außen im Sinne einer divergenten Kegelfläche 52 ausgebildet sein kann und die Außenmantelfläche konkav gerundet sein kann. Die den Dichtungsring 51 aufnehmende Ringnut 24b ist mit einer schrägen Flankenfläche 53 entsprechend geformt. Bei dieser Ausgestaltung erfüllt der dem Ringdichtungselement 25 abgewandte Abschnitt oder Bandabschnitt 23c des Dichtungsringes 51 einen ringförmigen Ventilkörper 54, der einen in seinem seitlichen Bereich angeordneten und den zugehörigen radialen Leitungsabschnitt 21 bildenden Querkanal 55 durch vorzugsweise eine elastische Spannung abdeckt und verschließt. Im Funktionsbetrieb wird der ringförmige Ventilkörper 54 durch den Druck des Mediums von der zylindrischen Grundfläche der Ringnut 24b abgehoben und der Durchgang geöffnet. Nach dem Abschalten des zugehörigen Steuerventils schließt der ringförmige Ventilkörper 54 aufgrund seiner elastischen Eigenspannung den Querkanal 55 selbsttätig, wodurch die Funktion des Rückschlagventils 35 gewährleistet ist. Bei dieser Ausgestaltung ersetzt der Dichtungsring 51 einen der bekannten Dichtungsringe 38 in Form von O-Ringen, wobei er gleichzeitig ein Rückschlagventil 35 bildet. Der Bandabschnitt 23c überdeckt den Querkanal 55 vorzugsweise mit seinem freien, in Fig. 5 linken Randbereich. Auch der Dichtungsring 51 weist im Bereich des Bandabschnitts 23c eine Ringnut 27 mit dem Durchmesser g auf, so daß die dem Bandabschnitt 23c gegenüberliegende Ringnut 28a vorhanden sein kann oder nicht.

Auf der dem Ringdichtungselement 25 gegenüberliegenden Seite des radialen Leitungsabschnitts 21 ist ein Dichtungsring 38a herkömmlicher Art in Form eines O-Ringes in einer Ringnut 39a vorgesehen. Auch auf der dem Ringdichtungselement 25 weiter abgewandten Seite des radialen Medienleitungsabschnitts 22 ist der bereis beschriebene Dichtungsring 38 (O-Ring) in der Ringnut 39 angeordnet.

Im Rahmen der Erfindung kann der Dichtungsring 51 auch jeweils einen der beiden anderen dargestellten Dichtungsringe 38, 38a bilden, wobei er dann, wenn er einen äußeren dieser Dichtungsringe 38 bildet sein Ringdichtungselement 25 außen anzuordnen ist, während er dann, wenn er den mittleren Dichtungsring 38a ersetzt sein Ringdichtungselement 25 wahlweise rechts oder links angeordnet sein kann und jeweils wenigstens ein weiterer Dichtungsring 38 vorzusehen ist.

Bei den vorbeschriebenen Ausgestaltungen ist die Innenmantelfläche der Dichtungsringe 23, 23b 51 jeweils zylindrisch, wobei die Grundfläche der zugehörigen Aufnahmeringnuten 24, 24a, 24b entsprechend zylindrisch bemessen ist. Es ist im Rahmen der Erfindung jedoch auch möglich, der Innenfläche der Dichtungsringe 23, 51 eine andere Form zu geben.

Das Behandlungsinstrument 1 nach dem Ausführungsbeispiel nach Fig. 6 bis 9 unterscheidet sich von dem Ausführungsbeispiel gemäß Fig. 1 bis 4 in zweifacher Hinsicht. Zum einen handelt es sich um ein sogenanntes Turbinen-Instrument, bei dem eine weitere Medienleitung 61 für Druckluft vorhanden ist, die die Steck/Dreh-Kupplung 4 ebenfalls durchsetzt und sich, bis zum vorderen Bereich des Handstücks 3 zu einer dort vorgesehenen, nicht dargestellten Turbine erstreckt, wobei ein Rückführungskanal für die Antriebsluft aus Vereinfachungsgründen nicht dargestellt ist. Die Mediumleitung 61 durchsetzt die Kupplung Z-förmig im Sinne der vorbeschriebenen bekannten Ausgestaltung im Bereich eines verjüngten Abschnitts des Kupplungszapfens 6, wobei die Abdichtung mittels bekannten Dichtungsringen 38b in Form O-Ringen erfolgt. Im Rahmen der Erfindung ist es möglich, diese Durchdringungsstellen mit erfindungsgemäßen Dichtungsringen 23, 23b, 51 abzudichten. Bei der vorliegenden Ausgestaltung sind lediglich die Medienleitungen 12, 13 für Blasluft und Druckluft entsprechend ausgebildet.

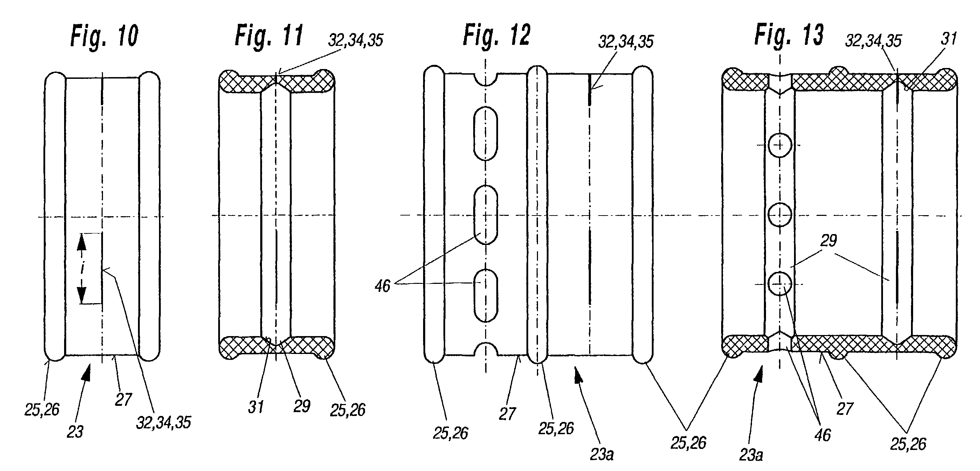

Ein weiterer Unterschied besteht darin, daß die radialen Medienleitungsabschnitte 21, 22 für Luft und Wasser axial umgekehrt angeordnet sind, d.h., der radiale Leitungsabschnitt 21 für Wasser befindet sich vor dem radialen Leitungsabschnitt 22 für Luft, so daß sich axial umgekehrte Positionen für die radialen Leitungsabschnitte 21, 22 ergeben. Im übrigen entsprechen die Ausgestaltungen gemäß den Fig. 6 bis 15 den vorbeschriebenen Ausgestaltungen und Anordnungen entsprechend bzw. entsprechend axial versetzt, so daß eine weitere Beschreibung nicht erforderlich ist. Dies gilt sowohl für die Abmessungen der Dichtungsringe 23, 23b, 51 als auch für die Ausgestaltung im den Dichtungsringen 23, 23b, 51 gegenüberliegenden Bereich der Innenwandung der Kupplungsausnehmung 5 im Sinne der Einzelheiten X,Y mit oder ohne Ringnut 28a oder auch 37.

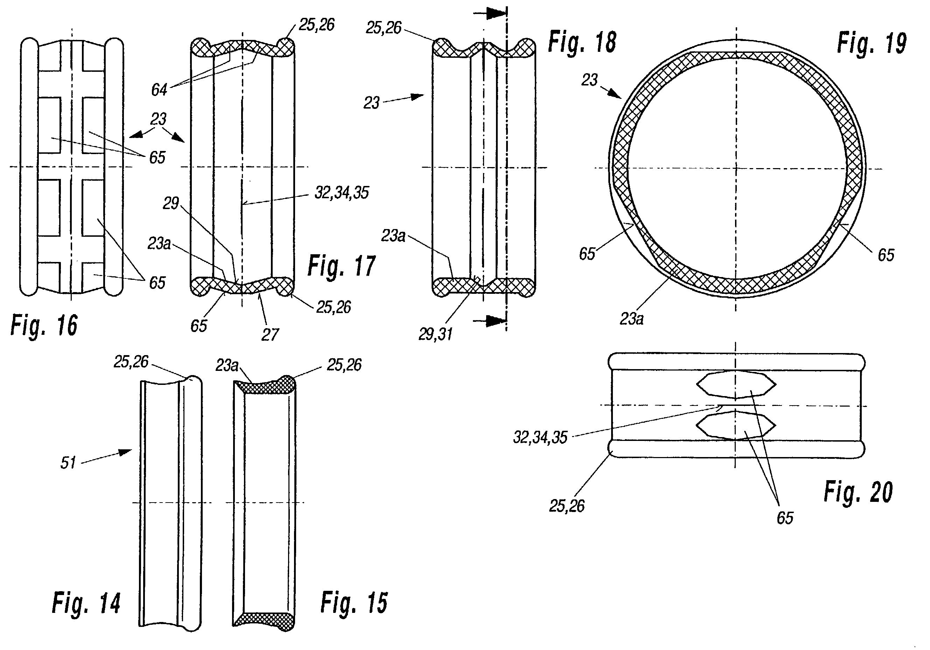

Bei den Ausführungsbeispielen nach den Fig. 16 bis 20, bei denen erfindungsgemäße Dichtungsringe 23 in abgewandelten Ausgestaltungen dargestellt sind, unterscheiden sich von den vorbeschriebenen Ausgestaltungen folgendermaßen. Bei der Ausgestaltung gemäß Fig. 16 und 17 ist der sich zwischen den Ringdichtungselementen 25 erstreckende schlauchförmige Bandabschnitt 23a nicht hohlzylindrisch sondern im axialen Schnitt im Sinne von zwei spiegelbildlich zueinander angeordneten hohlkegelförmig ausgebildeten Kegelabschnitten 64 konvex bogenförmig geformt, wodurch an der Innenseite die Ringnut 29 gebildet ist. Außerdem sind bei dieser Ausgestaltung mehr als drei, nämlich sechs Durchgangskanäle 32 in Form von vorbeschriebenen Rückschlagventilen 35 auf dem Umfang verteilt angeordnet.

Außerdem ist bei dieser Ausgestaltung der schlauchförmige Abschnitt 23a zu beiden Seiten jedes schlitzförmigen Durchgangskanals 32 durch sekantiale Ausnehmungen 65 hinterschnitten, wobei die Ausnehmungen 65 einen axialen Abstand i von den Schnitten 34 aufweisen. Durch die durch die Ausnehmungen 65 gebildete Hinterschneidung des schlauchförmigen Abschnitts 23a wird die Elastizität der die Schnitte 34 aufweisenden Wandungen verbessert.

Beim Ausführungsbeispiel nach den Fig. 18 bis 20, bei dem ein Dichtungsring 23 nach den Fig. 3 und 9 zum Einsatz kommt, sind zu beiden Seiten der Schnitte 34 ebenfalls sekantiale Ausnehmungen 65 im hohlzylindrischen schlauchförmigen Abschnitt 23a des Dichtungsrings 23 vorgesehen, wobei diese Ausnehmungen 65 einen dreieckförmigen Querschnitt aufweisen. Auch hier wird die Elastizität und die Ventilfunktion der jeweils hinterschnittenen Wandungen verbessert.

Es ist aus Gründen einer Vermeidung von Beschädigungen der Dichtungsringe 23, 23b, 51, 38, 38a beim Einstecken des Kupplungszapfens 6 vorteilhaft, Kanten an der hohlzylindrischen Wandung der Kupplungsausnehmung zu brechen oder zu runden.

## Patentansprüche

1. Ärztliches oder zahnärztliches Behandlungsinstrument (1) mit einem Handstück (3), dessen vorderes Ende mit einem Behandlungswerkzeug (11) bestückbar ist, einem Anschlußteil (2), das durch eine flexible Versorgungsleitung mit einer Versorgungseinrichtung verbunden oder verbindbar ist, wobei das Handstück (3) und das Anschlußteil (2) durch eine Steck/Dreh-Kupplung (4) lösbar miteinander verbindbar sind, bestehend aus einer Kupplungsausnehmung (5) im einen Kupplungsteil, insbesondere im Handstück (3), und einem darin einsteckbaren Kupplungszapfen (6) am anderen Kupplungsteil, insbesondere am Anschlußteil (2), und wobei sich durch das Behandlungsinstrument (1) wenigstens eine Mediumleitung (12) erstreckt, die in den Kupplungsteilen achsparallel verlaufende Mediumleitungsabschnitte (15, 16,) aufweist, die durch einen die Trennfuge (19) zwischen dem Kupplungszapfen (6) und der Kupplungsausnehmung (5) Z-förmig durchsetzenden radialen Mediumleitungsabschnitt (21) miteinander verbunden sind, der im Bereich der Trennfuge (19) auf beiden Seiten jeweils durch einen in einer Ringnut (24b) angeordneten Dichtungsring (38a,51) abgedichtet ist,
**dadurch gekennzeichnet,**
**daß** einer der Dichtungsringe (51) die Querschnittsform eines flachen Bandes (23a) aufweist und mit der ihn aufnehmenden Ringnut (24b) in der Querebene des radialen Mediumleitungsabschnitts (21) angeordnet und breiter (a) als dessen Querschnittsabmessung (f) bemessen ist,
**daß** der Dichtungsring (51) auf seiner dem anderen Dichtungsring (38) abgewandten Seite ein Ringdichtungselement (25) aufweist, das auf der dem anderen Dichtungsring (38a) abgewandten Seite des radialen Mediumleitungsabschnitts (21) angeordnet ist,
**daß** der sich vom Ringdichtungselement (25) axial zum anderen Dichtungsring (38a) hin erstreckende Bandabschnitt (23c) den radialen Mediumleitungsabschnitt (21) abdeckt,
und **daß** die Dicke des Bandabschnitts (23c) geringer ist als die Tiefe (d) der Ringnut (24b),
oder daß die den Bandabschnitt (23c) stromab gegenüberliegende Wandung des zugehörigen Kupplungsteils eine Ringnut (28a, 37) aufweist.

2. Ärztliches oder zahnärztliches Behandlungsinstrument (1) mit einem Handstück (3), dessen vorderes Ende mit einem Behandlungswerkzeug (11) bestückbar ist, einem Anschlußteil (2), das durch eine flexible Versorgungsleitung mit einer Versorgungseinrichtung verbunden oder verbindbar ist, wobei das Handstück (3) und das Anschlußteil (2) durch eine Steck/Dreh-Kupplung (4) lösbar miteinander verbindbar sind, bestehend aus einer Kupplungsausnehmung (5) im einen Kupplungsteil, insbesondere im Handstück (3), und einem darin einsteckbaren Kupplungszapfen (6) am anderen Kupplungsteil, insbesondere am Anschlußteil (2), und wobei sich durch das Behandlungsinstrument (1) wenigstens eine Mediumleitung (12) erstreckt, die in den Kupplungsteilen achsparallel verlaufende Mediumleitungsabschnitte (15, 16,) aufweist, die durch einen die Trennfuge (19) zwischen dem Kupplungszapfen (6) und der Kupplungsausnehmung (5) Z-förmig durchsetzenden radialen Mediumleitungsabschnitt (21) miteinander verbunden sind, der im Bereich der Trennfuge (19) beiderseits abgedichtet ist,
wobei zur Abdichtung des radialen Mediumleitungsabschnitts (21) in der Trennfuge (19) ein in der Querebene des radialen Dichtungsleitungsabschnitts (21) angeordneter Dichtungsring (23, 23b) vorgesehen ist, der in einer Ringnut (24, 24a) sitzt, wobei der Dichtungsring (23, 23b) und die Ringnut (24, 24a) eine größere Breite (a) aufweisen als die Querschnittsabmessung (f) des radialen Mediumleitungsabschnitts (21),
**dadurch gekennzeichnet,**
**daß** der Dichtungsring (23, 23b) die Querschnittsform eines flachen Bandes (23a) aufweist, auf beiden Seiten des radialen Mediumleitungsdabschnitts (21) jeweils ein Ringdichtungselement (25) aufweist und in seinem mittleren Bereich wenigstens einen radialen Durchgangskanal (32) aufweist, der durch einen Schlitz oder Schnitt (34) gebildet ist,
und **daß** die Dicke des zwischen den Ringdichtungselementen (25) vorhandenen axialen Bandabschnitts geringer ist als die Tiefe (d) der Ringnut (24, 24a)
oder daß die den axialen Bandabschnitt stromab gegenüberliegende Wandung des zugehörigen Kupplungsteils eine Ringnut (28a, 37) aufweist.

3. Behandlungsinstrument nach Anspruch 2,
**dadurch gekennzeichnet,**
**daß** die Ringnut (24a) und der Dichtungsring (23b) sich über wenigstens zwei einander axial benachbarte radiale Mediumleitungsabschnitte (21, 22) erstrecken, und daß der Dichtungsring (23b) zwischen den radialen Mediumsleitungsabschnitten (21, 22) ein weiteres Ringdichtungselement (25) und in jeder Querebene der radialen Mediumleitungsabschnitte (21, 22) wenigstens einen Durchgangskanal (32) aufweist.

4. Behandlungsinstrument nach Anspruch 2 oder 3,
**dadurch gekennzeichnet,**
**daß** der Schlitz oder Schnitt (34) in Umfangsrichtung verläuft.

5. Behandlungsinstrument nach einem der vorherigen Ansprüche,
**dadurch gekennzeichnet,**
**daß** der Dichtungsring (23, 23b) in seiner dem Grund der Ringnut (24, 24a) zugewandten Mantelfläche in der Querebene des wenigstens einen Durchgangskanals (32) eine Ringnut (29) vorzugsweise konvergenten, insbesondere dreieckförmigen Querschnitts aufweist.

6. Behandlungsinstrument nach einem der vorherigen Ansprüche,
**dadurch gekennzeichnet,**
**daß** das Band (23a) oder der Bandabschnitt (23c) mit einer elastischen radialen Spannung an der Grundfläche der Ringnut (24, 24a, 24b) anliegt.

7. Behandlungsinstrument nach einem der vorherigen Ansprüche,
**dadurch gekennzeichnet,**
**daß** die Ringdichtungselemente (25) jeweils durch einen vorzugsweise gerundeten Ringwulst (26) gebildet sind.

8. Behandlungsinstrument nach einem der vorherigen Ansprüche,
**dadurch gekennzeichnet,**
**daß** der Dichtungsring (23, 23b, 23c, 51) an seiner dem Grund der Ringnut (24, 24a, 24b) zugewandten Seite hohlzylindrisch geformt ist.

9. Behandlungsinstrument nach einem der vorherigen Ansprüche,
**dadurch gekennzeichnet,**
**daß** die dem Dichtungsring (23,23b,51) stromab gegenüberliegende Wandung des zugehörigen Kupplungsteils (Kupplungsausnehmung 5) hohlzylindrisch ausgebildet ist.

10. Behandlungsinstrument nach einem der vorherigen Ansprüche,
**dadurch gekennzeichnet,**
**daß** der Dichtungsring (23, 23b, 51) mit der ihn aufnehmenden Ringnut (24, 24a, 24b) im Kupplungszapfen (6) angeordnet ist.

## Claims

1. Medical or dental treatment instrument (1) having a handpiece (3), the forward end of which can be equipped with a treatment tool (11), a connection part (2), which is connected or connectable by means of a flexible supply line with a supply device, the handpiece (3) and the connection part (2) being releasably connectable with one another by means of a plug-in/turn coupling (4) comprising a coupling recess (5) in the one coupling part, in particular in the handpiece (3), and a coupling pin (6) which can be inserted therein on the other coupling part, in particular on the connection part (2), there extending through the treatment instrument (1) at least one medium line (12) which in the coupling parts has medium line sections (15, 16) running axis parallel, which are connected with one another by means of a radial medium line section (21) passing through the separation joint (19) between the coupling pin (6) and the coupling recess (5) in a Z-shape, which radial medium line section is sealed in the region of the separation joint (19) on both sides, in each case by means of a sealing ring (38a, 51) arranged in a ring groove (24b),
**characterised in that**,
one of the sealing rings (51) has the cross-sectional form of a flat band (23a) and, with the ring groove (24b) receiving it, is arranged in the transverse plane of the radial medium line section (21) and is dimensioned to be wider (a) than the cross-sectional dimension (f) thereof,
**in that** the sealing ring (51) has on its side away from the other sealing ring (38) a ring sealing element (25) which is arranged on the side of the radial medium line section (21) away from the other sealing ring (38a),
**in that** the band section (23c) extending from the ring sealing element (25) axially towards the other sealing ring (38a) covers over the radial medium line section (21),
and **in that** the thickness of the band section (23c) is less than the depth (d) of the ring groove (24b),
or **in that** the wall of the associated coupling part downstream opposite the band section (23c) has a ring groove (28a, 37).

2. Medical or dental treatment instrument (1) having a handpiece (3), the forward end of which can be equipped with a treatment tool (11), a connection part (2)', which is connected or connectable by means of a flexible supply line with a supply device, the handpiece (3) and the connection part (2) being releasably connectable with one another by means of a plug-in/turn coupling (4) comprising a coupling recess (5) in the one coupling part, in particular in the handpiece (3), and a coupling pin (6) which can be inserted therein on the other coupling part, in particular on the connection part (2), there extending through the treatment instrument (1) at least one medium line (12) which in the coupling parts has medium line sections (15, 16) running axis parallel, which are connected with one another by means of a radial medium line section (21) passing through the separation joint (19) between the coupling pin (6) and the coupling recess (5) in a Z-shape, which radial medium line section is sealed to both sides in the region of the separation joint (19),
whereby for sealing of the radial medium line section (21) in the separation joint (19) there is provided a sealing ring (23, 23b) arranged in the transverse plane of the radial sealing line section (21), which sealing ring sits in a ring groove (24, 24a), the sealing ring (23, 23b) and the ring groove (24, 24a) having a greater width (a) than the cross-sectional dimension (f) of the radial medium line section (21),
**characterised in that**,
the sealing ring (23, 23b) has the cross-sectional form of a flat band (23a), has respective ring sealing elements (25) on the two sides of the radial medium line section (21) and has in its middle region at least one radial through channel (32) which is formed by means of slit or cut (34),
and **in that** the thickness of the axial band section present between the ring sealing elements (25) is less than the depth (d) of the ring groove (24, 24a)
or **in that** the wall of the associated coupling part downstream opposite the axial band section has a ring groove (24a, 37).

3. Treatment instrument according to claim 2,
**characterised in that**,
the ring groove (24a) and the sealing ring (23b) extend over at least two radial medium line sections (21, 22) axially neighbouring one another, and **in that** the sealing ring (23b) has a further ring sealing element (25) between the radial medium line sections (21, 22) and has at least one through channel (32) in each transverse plane of the radial medium line sections (21, 22).

4. Treatment instrument according to claim 2 or 3,
**characterised in that**,
the slit or cut (34) runs in the circumferential direction.

5. Treatment instrument according to any preceding claim,
**characterised in that**,
the sealing ring (23, 23b) has in its surface towards the floor of the ring groove (24, 24a), in the transverse plane of the at least one through channel (32), a ring groove (29) preferably of convergent, in particular triangular, cross-section.

6. Treatment instrument according to any preceding claim,
**characterised in that**,
the band (23a) or the band section (23c) bears on the floor surface of the ring groove (24, 24a, 24b) with an elastic radial tensioning.

7. Treatment instrument according to any preceding claim,
**characterised in that**,
the ring sealing elements (25) are each formed by means of a preferably rounded ring beading (26).

8. Treatment instrument according to any preceding claim,
**characterised in that**,
the sealing ring (23, 23b, 23c, 51) is, on its side towards the floor of the ring groove (24, 24a, 24b) hollow cylindrical shaped.

9. Treatment instrument according to any preceding claim,
**characterised in that**,
the wall of the associated coupling part (coupling recess 5) downstream opposite the sealing ring (23, 23b, 51) is formed hollow cylindrically.

10. Treatment instrument according to any preceding claim,
**characterised in that**,
the sealing ring (23, 23b, 51), with the ring groove (24, 24a, 24b) which receives it, is arranged in the coupling pin (6).

## Revendications

1. Instrument de traitement médical ou dentaire (1) avec une pièce à main (3) dont l'extrémité antérieure peut être équipée d'un outil de traitement (11), une partie de connexion (2) qui est raccordée ou peut être raccordée par une conduite d'alimentation souple à un dispositif d'alimentation, tandis que la pièce à main (3) et la partie de connexion (2) peuvent être raccordées entre elles de façon amovible par un accouplement enfichable/rotatif (4), consistant en un évidement d'accouplement (5) prévu dans une partie d'accouplement, en particulier dans la pièce à main (3), et un tourillon d'accouplement (6) enfichable dans celui-ci et prévu dans l'autre partie d'accouplement, en particulier sur la partie de connexion (2), et tandis qu'à travers l'instrument de traitement (1) s'étend au moins une conduite (12) pour un agent qui présente des tronçons de conduite (15,16) qui s'étendent parallèlement à l'axe dans les parties d'accouplement et qui sont raccordés entre eux par un tronçon de conduite radial (21) traversant en Z le joint de séparation (19) entre le tourillon d'accouplement (6) et l'évidement d'accouplement (5), lequel tronçon de conduite, dans la zone du joint de séparation (19), est rendu étanche sur deux côtés respectivement par une bague d'étanchéité (38a,51) disposée dans une gorge annulaire (24b),
**caractérisé**
**en ce que** l'une des bagues d'étanchéité (51) présente en coupe transversale la forme d'un ruban plat (23a) et elle est disposée avec sa gorge annulaire réceptrice (24b) dans le plan transversal du tronçon de conduite (21) radial et est dimensionnée de façon plus large (a) que sa dimension de section transversale,
**en ce que** la bague d'étanchéité (51) présente, sur son côté opposé à l'autre bague d'étanchéité (38), un élément d'étanchéité annulaire (25) qui est disposé sur le côté opposé à l'autre bague d'étanchéité (38a) du tronçon de conduite d'agent (21) radial,
**en ce que** le tronçon de ruban (23c) s'étendant axialement depuis l'élément d'étanchéité annulaire (25) jusqu'à l'autre bague d'étanchéité (38a) recouvre le tronçon de conduite d'agent (21) radial,
et **en ce que** l'épaisseur du tronçon de ruban (23c) est inférieure à la profondeur (d) de la gorge annulaire (24b),
ou en ce que la paroi opposée de la partie d'accouplement correspondante en aval du tronçon de ruban (23c) présente une gorge annulaire (28a,37).

2. Instrument de traitement médical ou dentaire (1) avec une pièce à main (3) dont l'extrémité antérieure peut être équipée d'un outil de traitement (11), une partie de connexion (2) qui est raccordée ou peut être raccordée par une conduite d'alimentation souple à un dispositif d'alimentation, tandis que la pièce à main (3) et la partie de connexion (2) peuvent être raccordées entre elles de façon amovible par un accouplement enfichable/rotatif (4), consistant en un évidement d'accouplement (5) prévu dans une partie d'accouplement, en particulier dans la pièce à main (3), et un tourillon d'accouplement (6) enfichable dans celle-ci prévu sur l'autre partie d'accouplement, en particulier sur la partie de connexion (2), et tandis qu'à travers l'instrument de traitement (1) s'étend au moins une conduite (12) pour un agent qui présente des tronçons de conduite (15,16) qui s'étendent parallèlement à l'axe dans les parties d'accouplement et qui sont raccordés entre eux par un tronçon de conduite d'agent (21) radial traversant en Z le joint d'étanchéité (19) entre le tourillon d'accouplement (6) et l'évidement d'accouplement (5), lequel tronçon de conduite radial (21), dans la zone du joint de séparation (19), est rendu étanche sur les deux côtés,
tandis que, pour l'étanchéité du tronçon de conduite (21) radial dans le joint de séparation (19), il est prévu une bague d'étanchéité (23,23b) disposée dans le plan transversal du tronçon de conduite d'étanchéité (21) radial, laquelle bague d'étanchéité est logée dans une gorge axiale (24,24a), tandis que la bague d'étanchéité (23,23b) et la gorge annulaire (24,24a) présentent une largeur (a) plus grande que la dimension (f) de section transversale du tronçon de conduite (21) radial,
**caractérisé**
**en ce que** la bague d'étanchéité (23,23b) présente en section transversale la forme d'un ruban plat (23a), présente un élément d'étanchéité annulaire (25) respectivement sur les deux côtés du tronçon de conduite d'agent (21) radial, et présente dans sa zone médiane au moins un canal de traversée (32) radial qui est formé par une fente ou une découpe (34),
et **en ce que** l'épaisseur du tronçon de ruban axial prévu entre les éléments d'étanchéité annulaire (25) est inférieure à la profondeur (d) de la gorge annulaire (24,24a)
ou **en ce que** la paroi de la partie d'accouplement correspondante opposée en aval du tronçon de ruban axial, présente une gorge annulaire (28a,37).

3. Instrument de traitement selon la revendication 2,
**caractérisé en ce que**
la gorge annulaire (24a) et la gorge d'étanchéité (23b) s'étendent sur au moins deux tronçons de conduite d'agent (21,22) radiaux axialement adjacents entre eux et **en ce que** la bague d'étanchéité (23b) présente, entre les tronçons de conduite d'agent (21,22) radiaux, un autre élément d'étanchéité annulaire (25) et comporte, au moins dans chaque plan transversal des tronçons de conduite d'agent (21,22) radiaux, un canal de traversée (32).

4. Instrument de traitement selon la revendication 2 ou 3,
**caractérisé en ce que**
la fente ou la découpe (34) s'étend selon une direction périphérique.

5. Instrument de traitement selon l'une des revendications précédentes,
**caractérisé en ce que**
la bague d'étanchéité (23,23b) présente, dans sa face opposée au fond de la gorge annulaire (24,24a) dans le plan transversal d'au moins un canal de traversée (32), une gorge annulaire (29) de section transversale de préférence convergente, en particulier triangulaire.

6. Instrument de traitement selon l'une des revendications précédentes,
**caractérisé en ce que**
le ruban (23a) ou le tronçon de ruban (23c) vient en butée avec une tension élastique radiale sur le fond de la gorge annulaire (24,24a,24b).

7. Instrument de traitement selon l'une des revendications précédentes,
**caractérisé en ce que**
les éléments d'étanchéité annulaires (25) sont respectivement formés par un bourrelet annulaire (26) de préférence arrondi.

8. Instrument selon l'une des revendications précédentes,
**caractérisé en ce que**
la bague d'étanchéité (23,23b,23c,51) est formée en cylindre creux sur son côté opposé au fond de la gorge annulaire (24,24a,24b).

9. Instrument de traitement selon l'une des revendications précédentes,
**caractérisé en ce que**
la paroi opposée en aval de la bague d'étanchéité (23,23b,51) de la partie d'accouplement correspondante (évidement d'accouplement 5) est formée en cylindre creux.

10. Instrument de traitement selon l'une des revendications précédentes,
**caractérisé en ce que**
la bague d'étanchéité (23,23b,51) est agencée avec la gorge annulaire réceptrice (24,24a,24b) dans le tourillon d'accouplement (6).
